Europäisches Patentamt

(19) European Patent Office    (11) Numéro de publication: **0 000 046**

Office européen des brevets    **B1**

(12)    **FASCICULE DE BREVET EUROPEEN**

(45) Date de publication du fascicule de brevet: **12.08.81**    �took (51) Int. Cl.³: **B 60 H 1/00, G 05 G 7/04**

(21) Numéro de dépôt: **78100084.9**

(22) Date de dépôt: **05.06.78**

(54) **Dispositif de manoeuvre par levier pour les commandes de climatisation d'un véhicule.**

(30) Priorité: **13.06.77 FR 7717987**

(43) Date de publication de la demande:
**20.12.78 Bulletin 78/1**

(45) Mention de la délivrance du brevet:
**12.08.81 Bulletin 81/32**

(84) Etats Contractants Désignés:
**BE DE GB SE**

(56) Documents cités:
**FR - A - 1 348 211**
**FR - A - 2 229 568**
**US - A - 2 634 670**
**US - A - 2 851 898**

(73) Titulaire: **REGIE NATIONALE DES USINES RENAULT**
**Boite postale 103 8-10 avenue Emile Zola**
**F-92109 Boulogne-Billancourt (FR)**

(72) Inventeur: **Ha-Pham, Pascal**
**6, rue G.Guynemer**
**F-92600 Asnieres (FR)**

(74) Mandataire: **Casalonga, Axel et al,**
**Bureau D.A.Casalonga Lilienstrasse 77**
**D-8000 München 80 (DE)**

Courier Press, Leamington Spa, England.

Dispositif de manoeuvre par levier pour les commandes de climatisation d'un véhicule

La présente invention se rapporte à un dispositif de manoeuvre par levier pour les commandes de climatisation d'un véhicule automobile et en particulier à un mécanisme à commandes multiples actionnées au tableau de bord à partir d'un levier unique.

On connaît des dispositifs de commandes à distance par levier unique pouvant actionner successivement plusieurs organes de chauffage par l'intermédiaire de câbles.

Dans la FR - A - 2.229.568, le mouvement d'un levier principal est transformé par une série de rainures en forme de cames dans lesquelles sont guidées des tétons. Cames et tétons sont portés alternativement par le levier principal, par des biellettes intermédiaires articulées ou directement par la platine support du mécanisme.

Ce dispositif ne permet pas d'obtenir un couple de manoeuvre constant en cas de déséquilibre des efforts demandés par les différents câbles.

D'autre part, la géométrie de l'ensemble platine-levier et la configuration des lumières ou des cames déterminent de façon rigoureuse la trajectoire de chaque point du levier et donc l'orientation du départ des câbles, qu'il est pratiquement impossible de modifier pour adaptation à différents types de véhicules.

Un autre inconvénient réside dans le faite que les lumières de guidage créent des frottements qui entraînent un durcissement des manoeuvres et des risques de coincement surtout dans le cas d'une fabrication en série économiques à fortes tolérances.

La DE—A—2.418.226 décrit un dispositif de réglage par câbles des organes de climatisation d'un véhicule automobile dans lequel le levier de manoeuvre est articulé sur une platine fixe par l'intermédiaire d'un ensemble de leviers formant un parallèlogramme déformable.

La DE—A—1.962.108 décrit un dispositif plus particulièrement adapté à la commande d'une transmission hydrostatique dans lequel un levier de manoeuvre peut pivoter par rapport à un plateau oscillant monté sur une platine fixe.

Toutes ces réalisations sont complexes. Le but de l'invention est d'éviter ces inconvénients et de réaliser un dispositif de commande par levier unique, pivotant successivement autour de deux axes d'articulation et permettant:

—d'obtenir une orientation du départ des câbles dans toutes les directions, c'est-à-dire la possibilité de débattements variables en amplitude et en orientation, des divers points d'accrochage.

—de pouvoir commander successivement, au moins deux organes de climatisation demandant des efforts de traction inégaux, tout en conservant une régularité des efforts de manoeuvre sur toute la longueur de la course du levier.

—d'éliminer les pertes de rendement mécanique dues aux frottements ainsi que tout risque de coincement lors d'une fabrication en série.

Le dispositif à commandes multiples pour le réglage par câbles des organes de climatisation d'un véhicule automobile selon l'invention, comprend un levier de manoeuvre unique articulé sur une platine fixe par l'intermédiaire d'au moins une biellette sur laquelle est accrochée au moins un câble de commande. Ladite biellette est articulée sur la platine par un axe fixe et le levier peut pivoter par rapport à la biellette autour d'une articulation constituant un axe mobile par rapport à la platine et décalée par rapport à l'axe fixe précité. Selon l'invention, le dispositif comprend une biellette inférieure et une biellette supérieure. L'axe d'articulation fixe de chaque biellette est aligné en position de repos, avec l'axe mobile de l'autre biellette. Une première butée sert d'appui à la biellette supérieure en immobilisant son axe mobile pendant le mouvement du levier dans un sens à partir de la position de repos. Une deuxième butée sert d'appui à la biellette inférieure en immobilisant son axe mobile pendant le mouvement du levier dans l'autre sens à partir de la position de repos.

De la sorte, après que l'ensemble levier-biellette ait pivoté autour de l'axe fixe, la biellette vient en appui contre une butée de la platine si bien que l'axe mobile devient fixe à son tour et que le levier continue sa course en pivotant autour de cet axe.

La forme de la biellette peut être quelconque et posséder divers prolongements servant à l'accrochage des câbles dans une direction prédéterminée.

L'emploi d'articulations élimine du même coup les pertes par frottement et les risques de coincement.

Selon l'invention, le levier est de préférence articulé au moyel de deux axes mobiles entre deux biellettes respectivement supérieure et inférieure, de telle manière que l'axe d'articulation mobile du levier avec une biellette se superpose rigoureusement avec l'axe d'articulation fixe de l'autre biellette avec la platine, lorsque lesdites biellettes sont en butée simultanément sur la platine.

Chaque biellette peut être de forme quelconque et posséder un ou plusieurs prolongements de part et d'autre de l'entr'axes pour l'accrochage d'un ou plusieures câbles.

A partir de la position en butée simultanée des biellettes, dite position de repos, le levier peut pivoter sélectivement autour de son premier axe mobile rendu fixe par la biellette un butée en entrainant l'autre biellette articulée sur son deuxième axe mobile.

La forme du levier de manoeuvre est telle que sa position de repos ne corresponde pas forcément au milieu de sa course en façade, mais soit au contraire décentrée et adaptée aux efforts demandés par chaque commande, pour conserver une certaine régularité des efforts sur toute la longueur de la course.

C'est ainsi que le débattement en façade sera plus important lorsqu'une biellette portera deux cables simultanément, ou encore un seul cable dont la manoeuvre sera plus dure que pour celui porté par l'autre biellette.

D'autres avantages et particularités de l'invention ressortiront de la description qui suit d'un mode de réalisation donné à titre d'exemple en référence au dessin annexé sur lequel:
—la figure 1 représente en perspective, le dispositif de commande par levier selon l'invention, dans sa position de repos;
—la figure 2 est une vue en coupe dans un plan II passant par les axes d'articulation de la figure 1;
—les figures 3 et 4 montrent les deux positions extrèmes du levier pour lesquelles il pivote successivement autour de ses deux axes d'articulation, et
—la figure 5 représente une variante de réalisation dans laquelle la forme des biellettes permet une autre orientation du départ de câbles.

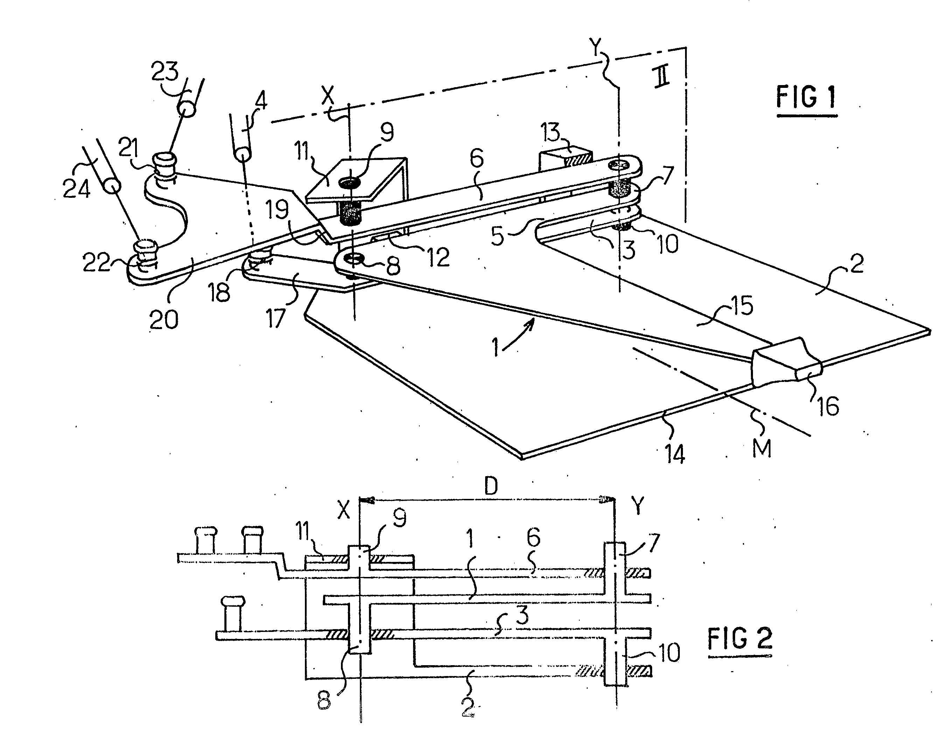

En se référant aux figures 1 et 2, le dispositif de commandes selon l'invention se compose essentiellement d'un levier pricipal ou de manoeuvre 1, monté pivotant sur une platine support 2 part l'intermédiaire d'au moins une biellette 3 de renvoi du mouvement sur laquelle sont accrochés un ou plusieurs câbles 4 destinés à la commande à distance des organes de climatisation du véhicule.

De préférence, le levier de manoeuvre 1 est articulé par une branche 5 entre deux biellettes parallèles respectivement supérieure 6 et inférieure 3 au moyen de deux axes 7, 8 mobiles par rapport à la platine, décalés et montés en sens opposés, tandis que lesdites biellettes sont articulées sur la platine 2 au moyen de deux axes fixes 9, 10, la biellette supérieure 6 étant montée sur un pontet 11 solidaire de la platine 2.

Comme on le voit plus clairement sur la figure 2, les entr'axes D des biellettes et du levier sont égaux et les axes d'articulation 8, 9 et 7, 10 se superposent sur les pivots X, Y lorsque le levier et les biellettes occupent la position de la figure 1, dite de repos.

Dans cette position, chaque biellette 3, 6 est en appui contre une butée 12, 13 de hauteur appropriée, solidaire du bord de la platine 2, opposé à la façade 14. L'autre branche 15 du levier 1, sensiblement à l'équerre avec la première 5, fait saillie par rapport à la façade 14 de la platine et se termine par un bouton de manoeuvre 16 qui est accessible sur le tableau de bord (non représenté) du véhicule.

Dans la position de repos de la figure 1, le bouton 16 est décentré par rapport au milieu M de la façade, laissant une course inégale du levier de part et d'autre de cette position, pour une raison qui apparaitra par la suite.

En dehors du positionnement précis des différents axes d'articulation, les formes du levier 1 et des parties terminales des biellettes 3, 6 servant respectivement à la manoeuvre et à l'accrochage des câbles, peuvent être quelconque.

Sur la réalisation représentée, la biellette inférieure 3 présente une partie terminale coudée 17 portant un plot 18 d'accrochage et la biellette supérieure 6 un léger décrochement 19 suivi d'une surface 20 plus évasée portant simultanément deux plots 21, 22 d'accrochage pour deux câbles 23, 24 distincts.

L'ensemble du dispositif est un assemblage de pièces fabriquées de préfrérence en plastique moulé. Les axes d'articulation peuvent soit être rapportés et clipsés dans des alésages appropriés, soit venir de moulage avec une pièce et âtre ensuite clipsés sur l'autre pièce de l'articulation. C'est ainsi que, sur la figure 2, le levier de manoeuvre 1 intercalé entre les deux biellettes 3, 6 comporte deux axes 7, 8 venant de moulage, clipsés dans les alésages correspondants de chaque biellette. Ces dernières comportent par ailleurs chacune un axe 9, 10 venant de moulage, clipsé dans l'alésage correspondant de la platine 2, 11. Pour une question de facilité de montage, il est cependant préférable de rapporter l'axe d'articulation 9 de la biellette supérieure 6 sur le pontet 11.

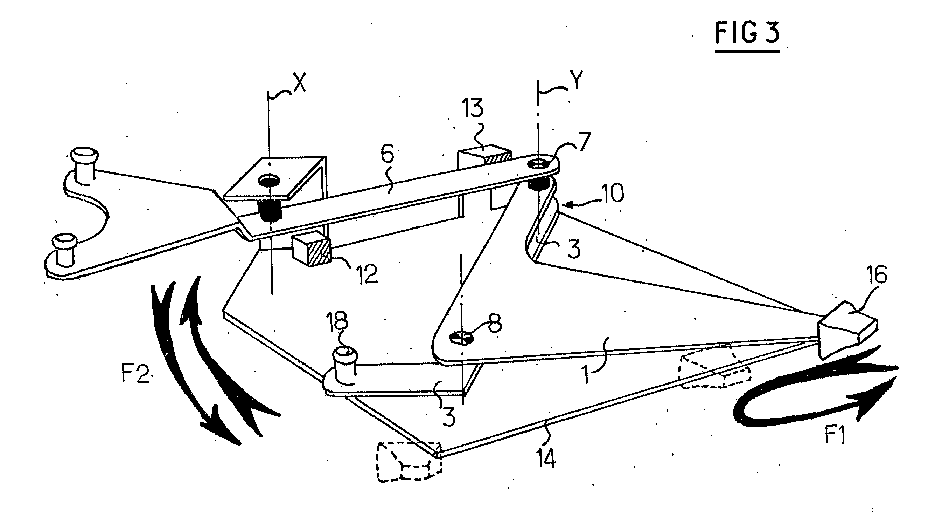

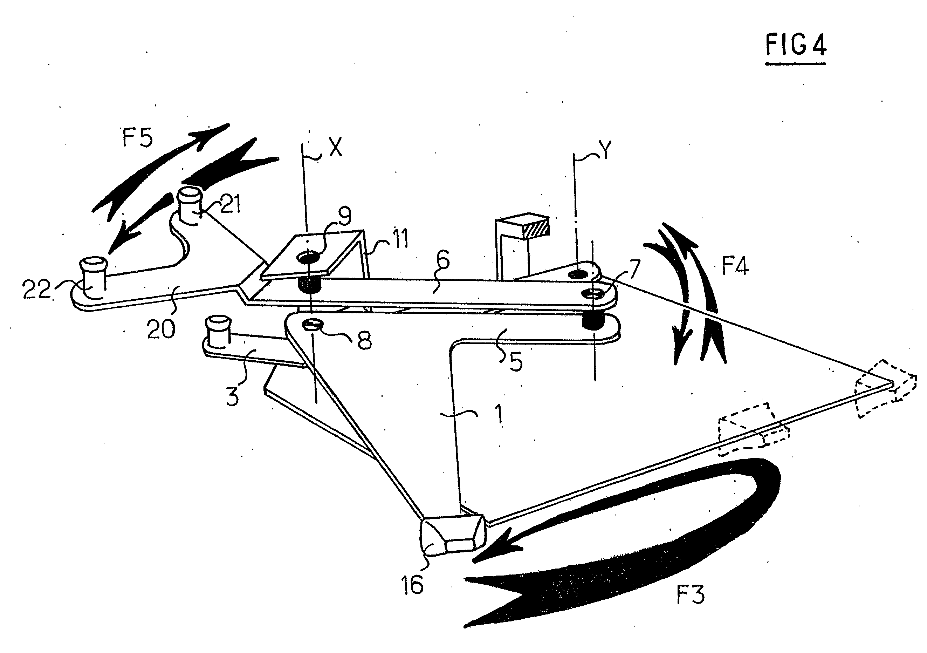

Le fonctionnement du dispositif est le suivant, en référence aux figures 3 et 4.

Pour passer de la position de repos (figure 1) à celle de la figure 3, on déplace le bouton de manoeuvre 16 du levier 1 parallélement à la façade 14 de la platine, vers l'extrémité correspondant à la course la plus petite.

Le levier, guidé le long de la façade de la platine, entraine la biellette inférieure 3 qui lui est solidaire par l'axe mobile 8, en la faisant pivoter autour de son axe fixe 10 (non visible).

Etant données la forme du levier 1 et son articulation simultanée avec la biellette supérieure 6 en appui contre sa butée 13, l'autre axe mobile 7 du levier est rendu provisoirement fixe et se confond avec l'axe fixe 10 de la biellette inférieure.

De cu fait, la biellette inférieure 3 et le levier 1 restent parallèles et pivotent autour du pivot commun Y.

Lorsque le bouton 16 effectue un aller-retour suivant la flèche Fl, l'extrémité de la biellette inférieure 3 parcourt le débattement angulaire représenté par la double flèche F2, déterminant ainsi l'orientation et la course du câble de commande (représenté par le plot 18).

En passant de la figure 3 à la figure 4 via la position de repos (figure 1), la biellette inférieure 3 prend appui contre sa butée 12. De ce fait, l'axe d'articulation 8 avec le levier, initialement mobile, devient fixe, tandis que l'axe d'articulation 7 avec la biellette supérieure 6 devient mobile.

Ainsi, au cours de son déplacement total, le levier l change de pivot Y vers X par l'immobilisation successive de chacun de ses deux axes mobiles 7, 8.

La biellette supérieur 6 est alors entraînée par le levier 1 dont la branche 5 lui reste parallèle (entre les deux axes) et pivote à son tour autour de son axe fixe 9 monté sur le pontet 11 de la platine et confondu avec le nouveau pivot.

Comme précédemment décrit, lorsque le bouton 16 effectue un aller-retour suivant la flèche F3, l'axe mobile 7 du levieur se débat suivant F4, ce qui entraîne l'extrémité 20 de la biellette supérieure 6 suivant le débattement angulaire représenté par la double flèche F5 en déterminant l'orientation et la course des deux câbles de commande représentés par les plots 21 et 22.

Le débattement de chaque biellette est lié à sa géométrie et à celle du levier de manoeuvre. Dans la réalisation représentée, la plus grande course du levier 1, à partir de sa position de repos correspond à l'entraînement de la biellette 6 munie de deux plots d'accrochage, c'est-à-dire de celle où l'effort à fournir est le plus important.

Cette démultiplication du mécanisme tend donc à obtenir en cas de déséquilibre des efforts de traction sur chacune des biellettes, une régularité des efforts et une douceur de manoeuvre sur toute la course du levier.

Quel que soit le nombre de biellettes utilisées, le mécanisme ne fait intervenir que des pièces et des axes d'articulation simples, ce qui a pour avantages d'éliminer quasi-totalement les pertes mécaniques par frottement et, de plus, de simplifier la fabrication du dispositif en vue d'obtenir des séries économiques.

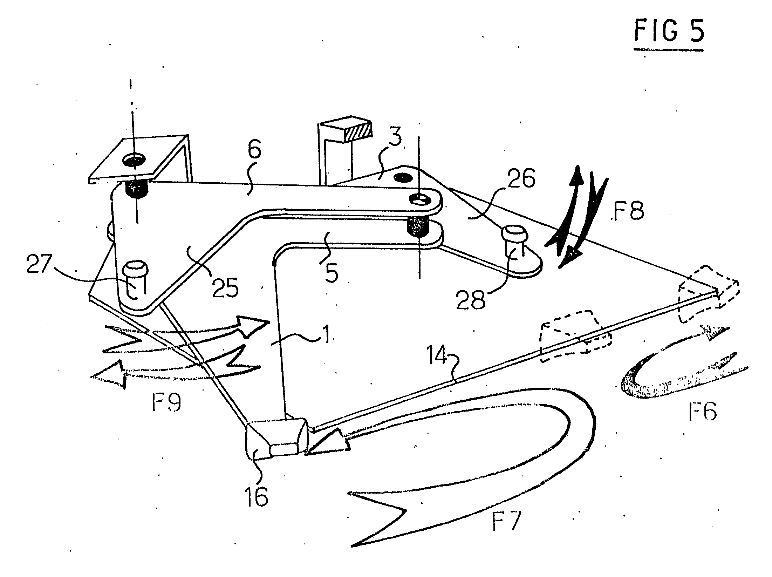

La figure 5 illustre une variante de réalisation dans laquelle les parties terminales d'accrochage des biellettes supérieure 6 et inférieure 3 possèdent d'autres formes. C'est ainsi que la biellette inférieure 3 est prolongée en 26 sur son autre extrémité par rapport à la biellette correspondante des figures 1 à 4 tandis que la biellette supérieure 6 possède un renvoi à l'équerre 25 et un seul plot 27 d'accrochage de câble. Les branches parallèles et superposées du levier et des biellettes, correspondant aux entr'axes, doivent être conservées pour un fonctionnement identique.

Comme on le voit, la manoeuvre du bouton 16 suivant les flèches F6 ou F7 a pour effets d'actionner respectivement les biellettes inférieure en F8 et supérieure en F9 et de donner aux plots 28, 27 des débattements angulaires différents de leures homologues des figures 3 et 4, ce qui autorise des départs de câbles dans d'autres directions prédéterminées, modifiables à volonté par l'adaptation de l'extrémité des biellettes 3, 6.

Par rapport à la position de repos du levier 1, la plus grande course en façade F7 est encore réservée au débattement du levier supérieur 6, ce qui, dans le cas d'un seul câble de commande, permet d'actionner un organe de climatisation demandant un effort plus important que l'autre.

Par la modification de la forme du levier principal 1 ramenant le bouton 16 au milieu de la façade 14 en position de repos, on obtient naturellement une répartition équilibrée des efforts sur chaque biellette.

## Revendications

1. Dispositif à commandes multiples pour le réglage par cables des organes de climatisation d'un véhicule automobile, comprenant un levier de manoeuvre unique (1) articulé sur une platine fixe (2) par l'intermédiaire d'au moins une biellette (3, 6) sur laquelle est accrochée au moins un câble de commande (4, 23, 24), ladite biellette (3, 6) étant articulée sur la platine par un axe fixe (10, 9) et le levier (1) pouvant pivoter par rapport à la biellette (3, 6) autour d'un axe mobile (8, 7) par rapport à la platine et décalé par rapport à l'axe fixe précité, caractérisé par le fait qu'il comprend une biellette inférieure (3) et une biellette supérieure (6), l'axe d'articulation fixe (10, 9) de chaque biellette étant aligné, en position de repos, avec l'axe mobile (7,8) de l'autre biellette, une première butée (13) servant d'appui à la biellette supérieure (6) en immobilisant son axe mobile (7) pendant le mouvement du levier dans un sens à partir de la position de repos, et une deuxième butée (12) servant d'appui à la biellette inférieure (3) en immobilisant son axe, mobile (8) pendant le mouvement du levier dans l'autre sens à partir de la position de repos.

2. Dispositif selon la revendication 1, caractérisé en ce que le levier (1) a une forme en équerre dont une branche (15) fait saillie par rapport à la façade (14) de la platine (2) pour assurer la manoeuvre du levier au moyen d'un bouton (16) et dont l'autre branche (5) porte à ses deux extrémités les axes mobiles (7, 8) d'articulation avec le biellettes (6, 3).

3. Dispositif selon l'une revendications 1 ou 2, caractérisé en ce que, lorsque les deux biellettes (3, 6) sont en butée simultanément, le bouton de manoeuvre (16) de la branche saillante (15) du levier occupe une position décentrée par rapport au milieu (M) de la façade (14) de la platine.

4. Dispositif selon l'une quelconque des revendications 1 à 3, caractérisé en ce que la biellette supérieure (6) est articulée sur la platine (2) par l'intermédiaire d'un pontet (11).

5. Dispositif selon l'une quelconque des revendications précédentes, caractérisé par le fait que chaque biellette possède au moins un prolongement d'un côté de l'entr'axes pour l'accrochage d'au moins un câble de commande.

6. Dispositif selon les revendications 1 et 5, caractérisé par le fait que la biellette inférieure (3) présente une partie terminale coudée (17) portant un plot (18) d'accrochage de câble et la biellette supérieure (6) présente un décrochement (19) suivi d'une surface évasée (20) portant deux plots (21, 22) d'accrochage pour deux câbles distincts.

7. Dispositif selon l'une quelconque des revendications 1 à 6, caractérisé par le fait que le levier de manoeuvre (1) est réalisé en matière plastique moulée et comporte deux axes (7, 8) venus de moulage jouant le rôle des axes mobiles précités, chaque biellette (3, 6) réalisée en matière plastique moulée comportant un axe (9, 10) venue de moulage jouant le rôle des axes fixes précités et un alésage recevant les axes (7, 8) du levier.

**Claims**

1. A multiple control device for adjusting the air conditioning systems of an automatic vehicle using cables, comprising a single operating lever (1) pivoting on a fixed plate (2) via at least one link (3, 6) to which is attached at least one control cable (4, 23, 24), the said link being pivoted on the plate by means of a fixed pin (10, 9) and the lever (1) being capable of pivoting with respect to the link (3, 6) round a movable pin (8, 7) that can move with respect to the plate and is offset with respect to the above-mentioned fixed pin, characterized by the fact that it comprises a bottom link (3) and a top link (6), with the fixed pivot pin (10, 9) of each link being aligned in the idle position with the movable pin (7, 8) of the other link, there being a first stop (13) acting as a rest for the top link (6) by holding its movable pin (7) stationary during the movement of the lever in one direction starting from the idle position, and a second stop (12) acting as rest for the bottom link (3) by holding its movable pin (8) stationary during the movement of the lever in the other direction from the idle position.

2. The device according to claim 1, characterized by the fact that lever (1) is bracket shaped with one arm (15) projecting in front of the front face (14) of the plate (2) to provide for operation of the lever by means of a knob (16) and with the other arm (5) carrying at its two ends the movable pins (7, 8) pivoting it on the links (6, 3).

3. The device according to either of claims 1 or 2, characterized by the fact that, when the two links (3, 6) are simultaneously against their stops the operating knob (16) of the projecting arm (15) of the lever occupies a position which is offset from the middle (M) of the plate front face (14).

4. The device according to any of claims 1 to 3, characterized by the fact that the top link (6) pivots on the plate (2) via a C-piece (11).

5. The device according to any of the previous claims, characterized by the fact that each link has at least one extension on one side of the pin-to-pin section for attaching at least one control cable.

6. The device according to claims 1 to 5, characterized by the fact that the bottom link (3) has a cranked end section (17) carrying a cable attachment stud (18) and the top link (6) has a change of level (19) followed by a flared surface (20) carrying two attachment studs (21, 22) for two separate cables.

7. The device according to any of claims 1 to 6, characterized by the fact that the operating lever (1) is made of moulded plastics material and comprises two moulded pins (7, 8) acting as the above-mentioned movable pins, with each link (3, 6) being made in moulded plastic material comprising a moulded pin (9, 10) acting as the above-mentioned fixed pins and a hole taking the lever pins (7, 8).

**Patentansprüche**

1. Mehrfachsteuervorrichtung zur Regelung der Bedienungselemente einer Klimatisierungsanlage eines Kraftfahrzeugs über Seilzüge, die umfasst : einen einzigen Bedienungshebel (1) der mittels wenigstens eines Schwingarms (3, 6) auf einer festen Platte (2) angelenkt ist, auf welchem Schwingarm mindestens ein Steuerseil (4, 23, 24) eingehängt ist, wobei dieser Schwingarm (3, 6) mittels einer festen Achse (10, 9) auf der Platte angelenkt ist und der Hebel (1) gegenüber dem Schwingarm (3,6) um eine bewegliche Achse (8, 7) gegenüber der Platte schwenkbar und gegenüber der vorgenannten festen Achse versetzt ist, dadurch gekennzeichnet, dass sie einen unteren Schwingarm (3) und einen oberen Schwingarm (6) umfasst, wobei die feste Drehachse (10, 9) jedes Schwingarms in Ruhestellung mit der beweglichen Achse (7, 8) des jeweils anderen Schwingarms fluchtet, wobei ein erster Anschlag (13) als Auflage für den oberen Schwingarm (6) dient indem er dessen bewegliche Achse (7) während der Bewegung des Hebels aus der Ruhestellung in der einen Richtung festlegt und ein zweiter Anschlag (12) für den unteren Schwingarm als Auflage (3) dient indem er dessen bewegliche Achse (8) während der Bewegung des Hebels aus der Ruhestellung in der anderen Richtung festlegt.

2. Vorrichung gemäss Anspruch 1, dadurch gekennzeichnet, dass der Hebel (1) die Form eines Winkels hat, dessen einer Schenkel (15) gegenüber der Vorderfront (14) der Platte (2) übersteht um die Betätigung des Hebels mittels eines Knopfes (16) zu sichern, und dessen anderer Schenkel (5) auf seinen beiden Enden die beweglichen Drehachsen (7, 8) für den Schwingsarmen (6, 3) trägt.

3. Vorrichtung gemäss eines der Ansprüche 1 oder 2, dadurch gekennzeichnet, dass der Bedienungsknopf (16) des überstehenden Schenkels (15) des Hebels gegenüber der Mitte (M) der Vorderfront (15) der Platte eine verschobene Lage einnimmt, wenn die Schwingarme (3, 6) gleichzeitig am Anschlag stehen.

4. Vorrichtung gemäss einem beliebigen der Ansprüche 1 bis 3, dadurch gekennzeichnet, dass der obere Schwingarm (6) auf der Platte (2) mittels eines Bügels (11) angelenkt ist.

5. Vorrichtung gemäss einem beliebigen der vorstehenden Ansprüche, dadurch gekennzeichnet, dass jeder Schwingarm an einer Seite des Achsabstands wenigstens eine Verlängerung hat, in die wenigstens ein Steuerseil eingehängt werden kann.

6. Vorrichtung, gemäss den Ansprüchen 1 und 5, dadurch gekennzeichnet, dass der untere Schwingarm (3) ein gekrümmtes Endteil (17) aufweist, das einen Vorsprung (18) zum Einhängen eines Seils hat, und dass der obere Schwingarm (6) eine Kröpfung (19) aufweist gefolgt von einer erweiterten Fläche (20), die zwei Vorsprünge (21, 22) zum Einhängen von zwei verschiedenen Seilen hat.

7. Vorrichtung gemäss einem beliebigen der Ansprüche 1 bis 6, dadurch gekennzeichnet, dass der Steuerhebel (1) aus Kunststoff formgepresst ist und zwei formgepresste Achsen (7, 8) hat, die die Rolle der vorgenannten beweglichen Achsen übernehmen, wobei jeder aus Kunststoff formgepresste Schwingarm (3, 6) eine formepresste Achse (9, 10) hat, die die Rolle der vorgenannten festen Achsen übernehmen, sowie eine Bohrung, die die Achsen (7, 8) des Hebels aufnimmt.

FIG 1

FIG 2

FIG 3

FIG 4

F4

F3

F5

FIG 5